# EUROPEAN PATENT APPLICATION

(11) **EP 3 780 341 A1**
(43) Date of publication of application: **17.02.2021**
(21) Application number: 19776809.6
(22) Date of filing: 15.02.2019
(51) Int. Cl.: H02K 1/14

(54) **ELECTRIC MOTOR**

(30) Priority: 27.03.2018 JP 2018059289
(71) Applicant: Mitsuba Corporation, Kiryu-shi Gunma 376-8555 (JP)
(72) Inventor: OHORI, Ryo, Kiryu-shi Gunma 376-8555 (JP); SHIODA, Naoki, Kiryu-shi Gunma 376-8555 (JP); SUGIYAMA, Tomoyasu, Kiryu-shi Gunma 376-8555 (JP); HAYATA, Masaki, Kiryu-shi Gunma 376-8555 (JP)
(74) Representative: Hoffmann Eitle
(86) International application number: PCT/JP2019/005545
(87) International publication number: WO 2019/187752

(57) **Abstract**

A brushless motor 2 has a stator core 14 with a polygonal outer shape in cross section. The stator core 14 has an outer peripheral part 15 and tooth parts 16. The outer peripheral part 15 has straight parts 31 formed at the bases of the respective tooth parts 16 and intermediate parts 32 each connecting adjacent straight parts 31. The intermediate part 32 has a bent part 33 bent along the peripheral direction (rotor rotation direction). A width W1 of the intermediate part 32 in the radial direction is set larger than a width W2 of the straight part 31 in the radial direction (W1 > W2), and the ratio between the two (W1/W2) is set in the range of 1.25 to 1.5.

## Description

### Technical Field

The present invention relates to an electric motor and, more particularly, to an electric motor having a stator with a polygonal outer shape in cross section.

### Background Art

It is known that radial electromagnetic excitation force applied to a stator causes vibration and noise in electric motors. For example, in radiation sound caused by stator vibration, a radial direction component is contained at a higher ratio than a rotation direction component and exerts greater influence. To reduce the vibration and noise caused by the radial electromagnetic excitation force, a stator has conventionally been sealed with a resin mold or the like for higher strength, which successfully reduces the vibration and noise.

### Citation List

### Patent Document

Patent Document 1: JP 2016-21822 A

### Disclosure of the Invention

### Problems to be Solved by the Invention

However, sealing the stator with a resin mold or the like disadvantageously increases manufacturing cost and motor size. Thus, there is a demand for a method that effectively reduces the vibration and noise in the electric motor without resin-molding the stator.

### Means for Solving the Problems

An electric motor according to the present invention includes a rotor and a stator core rotatably provided outside the rotor and having a polygonal outer shape in cross section. The stator core has a ring-shaped outer peripheral part and a plurality of tooth parts arranged along the rotation direction of the rotor so as to protrude from the outer peripheral part toward the rotor. The outer peripheral part has straight parts formed at the bases of the respective tooth parts, intermediate parts formed between adjacent straight parts, and bent parts each formed in each intermediate part. A width W1 of the intermediate part in the radial direction is larger than a width W2 of the straight part in the radial direction (W1 > W2).

In the present invention, in an electric motor having a stator core with a polygonal outer shape in cross section, straight parts are formed at the bases of respective tooth parts of the stator core, and intermediate parts each having a bent part are provided so as to connect adjacent straight parts. Then, a width W1 of the intermediate part in the radial direction is set larger than a width W2 of the straight part in the radial direction (W1 > W2). This increases the strength of the stator core, making it possible to effectively reduce vibration and noise without resin-molding the stator.

In the electric motor, the ratio (W1/W2) between the width W1 of the intermediate part in the radial direction and the width W2 of the straight part in the radial direction may be 1.25 to 1.5. In this case, the ratio W1/W2 may be preferably set near 1.25 (e.g., about 1.3). This makes it possible to increase the strength of the stator core while preventing an increase in the mass of the stator core and a decrease in a winding area. Thus, it is possible to effectively reduce vibration and noise while satisfactorily balancing between the stator core mass, winding area, and stator core strength.

Further, a winding wound around the tooth part and housed in a slot formed between the tooth parts may be provided in the electric motor, and the ratio (W1/W2) between the width W1 of the intermediate part in the radial direction and the width W2 of the straight part in the radial direction may be set in the range of 1.25 to 1.5 so as to relieve a stress applied to the intermediate part while preventing an increase in the mass of the stator core and a decrease in the winding area in the slot.

### Advantageous Effects of the Invention

According to the present invention, in an electric motor having a stator core with a polygonal outer shape in cross section, the outer peripheral part of the stator core has straight parts formed at the bases of respective tooth parts and intermediate parts each having a bent part provided so as to connect adjacent straight parts. A width W1 of the intermediate part in the radial direction is set larger than a width W2 of the straight part in the radial direction (W1 > W2). This increases the strength of the stator core, making it possible to effectively reduce vibration and noise without resin-molding the stator.

### Brief Description of the Drawings

FIG. 1 is a cross-sectional view illustrating the configuration of a motor unit using a brushless motor which is an embodiment of the present invention;
FIG. 2 is a cross-sectional view illustrating the configuration of the brushless motor used in the motor unit of FIG. 1;
FIG. 3 is a graph illustrating the relationship between the dimensional ratio between a straight part and an intermediate part, a stator mass, and a winding area;
FIG. 4 is a graph illustrating the relationship between the dimensional ratio between the straight part and the intermediate part and a stress applied to a bent part; and
FIG. 5 is an explanatory view illustrating a modification of a stator core to which the present invention is applicable.

### Best Mode for Carrying Out the Invention

Hereinafter, an embodiment of the present invention will be described in detail based on the drawings. An object of the embodiment described below is to effectively reduce vibration and noise in an electric motor having a stator with a polygonal outer shape in cross section without resin-molding the stator.

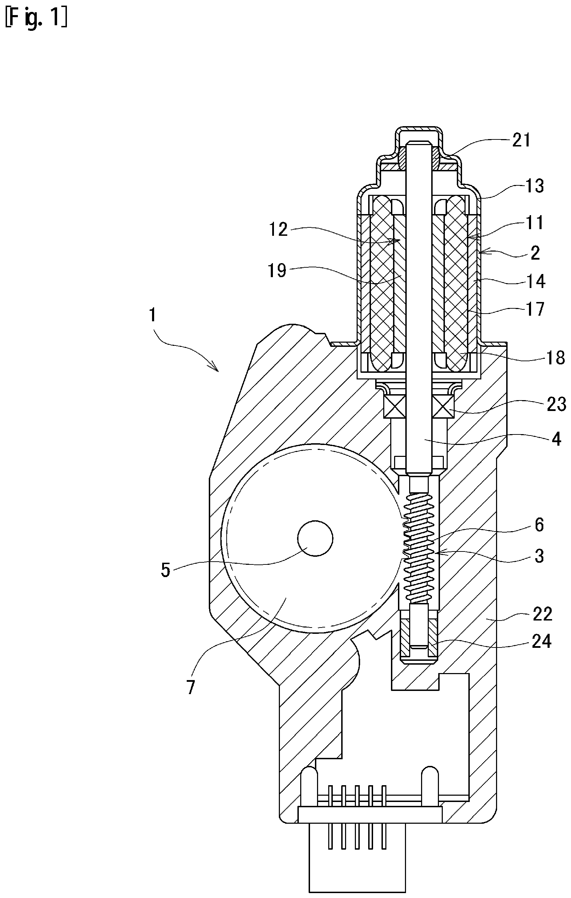

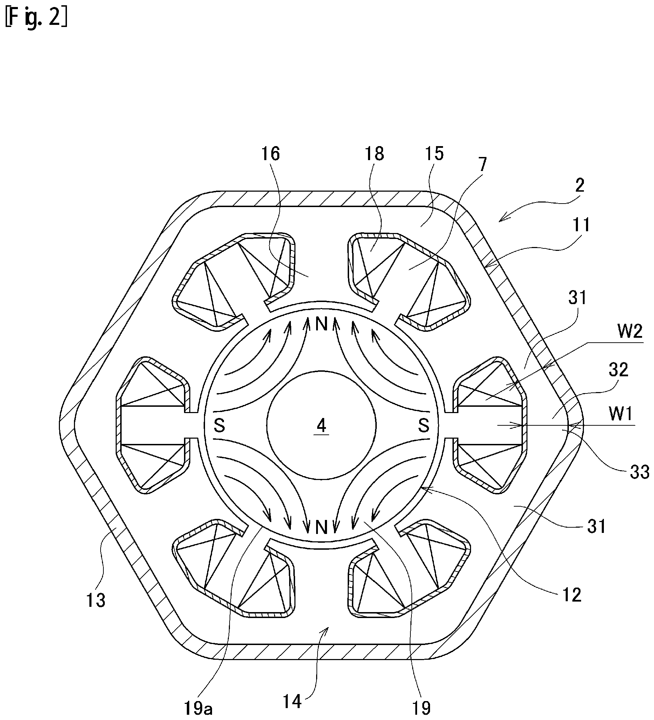

FIG. 1 is a cross-sectional view illustrating the configuration of a motor unit 1 using an electric motor which is an embodiment of the present invention. FIG. 2 is a cross-sectional view illustrating the configuration of the electric motor used in the motor unit of FIG. 1. A motor unit 1 of FIG. 1 includes an electric motor 2 (hereinafter, abbreviated as "motor 2") and a deceleration mechanism part (transmission mechanism) 3 and is used as a drive source for a sunroof, a wiper unit, a power window, a power sheet of automobiles, for example. In the motor unit 1, the rotation of a rotary shaft 4 of the motor 2 is shifted in speed in the deceleration mechanism part 3 and is then output outside the motor unit through an output shaft 5.

The motor 2 is a brushless motor and includes, as illustrated in FIGs. 1 and 2, a stator 11 and a rotor 12 rotatably disposed inside the stator 11. The stator 11 includes a motor housing 13 having a cylindrical shape with a closed bottom and a stator core 14 fixed to the inner surface of the motor housing 13. The stator core 14 has a plurality of magnet plates which are laminated one on another and includes an outer peripheral part 15 having a ring shape and tooth parts 16 protruding from the outer peripheral part 15 toward the center (radial inside). The tooth parts 16 are formed radially toward the rotor 12. In the motor 2, six tooth parts 16 are arranged along the rotor rotation direction. A slot 17 is defined between adjacent tooth parts 16, and the motor 2 has a six-slot configuration. A winding 18 is wound around the outer periphery of each tooth part 16. The winding 18 is housed in the slot 17.

As illustrated in FIG. 2, the outer peripheral part 15 of the stator core 14 has a hexagonal (polygonal) outer shape. The term "ring shape" in the present invention includes not only an annular shape but also a polygonal profile. The outer peripheral part 15 includes straight parts 31 and intermediate parts 32 each provided between adjacent straight parts. The straight part 31 is formed integrally with the tooth part 16 at the base part (at the radial outside) of the tooth part 16. The intermediate part 32 is provided between the tooth parts 16 so as to connect adjacent straight parts 31 one another. The straight part 31 is provided perpendicular to the tooth part 16. The intermediate part 32 has a bent part 33 bent in a "dog leg" shape along the peripheral direction (rotor rotation direction). The straight part 31 and the intermediate part 32 are connected seamlessly to each other, and the outer peripheral part 15 is formed integrally over the entire periphery without having any division.

The rotor 12 is inserted inside the stator 11. The rotor 12 includes a rotary shaft 4 and a magnet 19 fixed to the rotary shaft 4. One end of the rotary shaft 4 is rotatably supported by a bearing 21 provided at an end of the motor housing 13. The magnet 19 is a rare-earth permanent magnet such as a neodymium magnet, a dysprosium magnet, or a samarium magnet. The magnet 19 is magnetized in four poles, and the motor 2 is a four-pole, six-slot brushless motor.

The deceleration mechanism part 3 includes a worm (drive gear) 5 formed on the rotary shaft 4 and a worm wheel (driven gear) 6 meshing with the warm 5. The deceleration mechanism part 3 is housed in a gear case 22 formed of a synthetic resin or die-cast aluminum. As illustrated in FIG. 1, the opening side end of the motor housing 13 is fixed to the gear case 22. The rotary shaft 4 of the motor 2 extends into the gear case 22. The rotary shaft 4 is rotatably supported by bearings 23 and 24 provided in the gear case 22. The worm wheel 7 is fixed to the output shaft 5. The output shaft 5 rotates together with the worm wheel 7.

As described above, in the motor 2, the cross-sectional outer shape of the stator core 14 (outer shape of the cross section perpendicular to the rotary shaft 4) is polygonal (hexagonal, in the present embodiment). Typically, when using a polygonal stator, because of its structure, a stress concentrates on the intermediate part between adjacent tooth parts. Thus, a stress due to electromagnetic excitation force that causes vibration and noise becomes largest at the intermediate part (especially, bent part). A stator having a higher strength can more effectively suppress operating noise due to excitation force, and in a stator having a polygonal shape, an increase in the strength of the intermediate part is effective for reducing vibration and noise.

Thus, in the motor 2 according to the present invention, a thickness W1 of the intermediate part 32 is set larger than a thickness W2 of the straight part 31 (W1 > W2) so as to increase the strength of the intermediate part 32. In this case, the larger the thickness W1 of the intermediate part 32 becomes, the higher the strength thereof. On the other hand, however, the increase of the strength causes the increase of the size of the stator, which results in an increase in size and weight of the motor. Thus, to obtain optimum dimensions of the straight part 31 and the intermediate part 32, the present inventors compared, in a polygonal stator core, a stress generated in the radial electromagnetic excitation force tooth part 16, a stator mass and a winding area (area that can accommodate the winding in one slot), while changing the ratio between the dimensions of the straight part and the intermediate part.

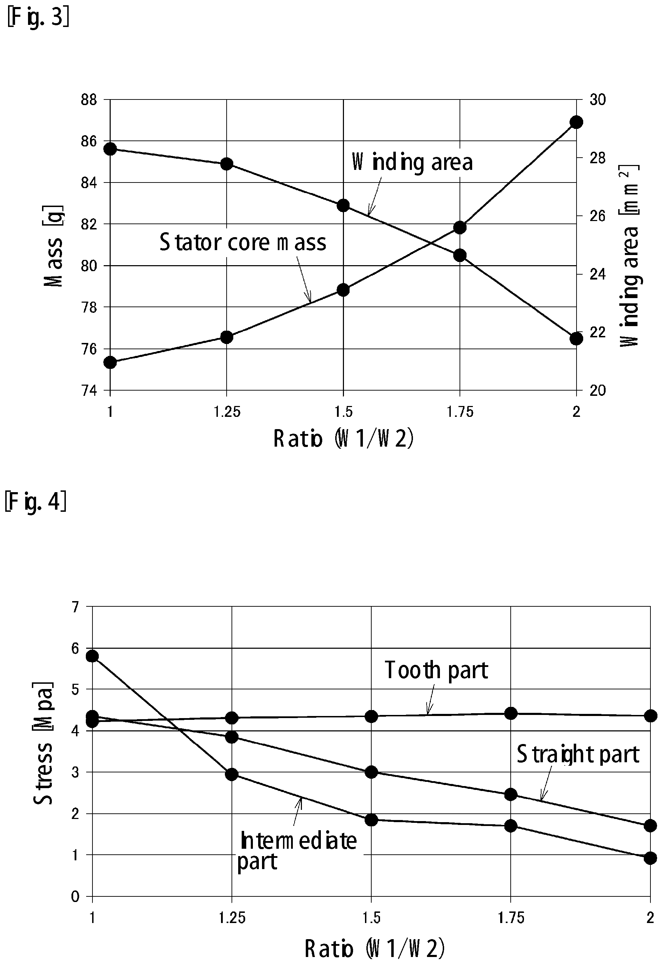

FIG. 3 and 4 are graphs illustrating, in the stator core 14 having the hexagonal cross-sectional outer shape, the relationship between the dimensional ratio between the straight part 31 and the intermediate part 32 (intermediate part/straight part = W1/W2) and the stator mass together with the winding area (FIG.3), and the relationship between said dimensional ratio and a stress applied to the bent part 33 (FIG.4). FIG. 3 reveals that when the dimension W1 of the intermediate part 32 is increased to increase the dimensional ratio W1/W2, the mass of the stator core 14 increases, and the winding area decreases; however, these changes show the tendency of a quadratic curve. This reveals that the dimensional ratio W1/W2 is desirable to be as small as possible.

Then, the tendency of the stress applied to the stator core 14 is considered. FIG. 4 reveals that when the dimension W1 of the intermediate part 32 is increased to increase the dimensional ratio W1/W2, the stress decreases as a whole. Thus, in terms of the stress, the dimensional ratio W1/W2 between the straight part 31 and the intermediate part 32 is desirable to be as large as possible. That is, in view of the relationship with the stator core mass and the winding area, the dimensional ratio W1/W2 is desirable to be as small as possible, and in view of the relationship with the stress, the dimensional ratio W1/W2 is desirable to be as large as possible, which means that there is a trade-off relationship in both sides.

Referring to FIG. 4, in the range of 1.5 to 1.75 of the dimensional ratio W1/W2 between the straight part 31 and the intermediate part 32, the stress generated in the intermediate part 32 does not significantly change, and the decrease degree thereof is small. Further, the stress of the straight part 31 linearly decreases, while the stress of the intermediate part 32 has a large rate of decrease in the range of 1.0 to 1.5. The stress of the intermediate part 32 when the W1/W2 is 1.25 decreases to the half of that when the W1/W2 is 1.0 and falls below 3 MPa. Further, the stresses of the straight part 31, intermediate part 32 and tooth part 16 are substantially equal when the W1/W2 is near 1.125 and comparatively close to each other when the W1/W2 is near 1.25.

Summarizing the above trade-off relationship so as to balance between the stator core mass together with the winding area and the stress, the following is found. That is, to relieve the stress of the intermediate part 32 while preventing an increase in the stator core mass and maintaining a sufficient winding area, the dimensional ratio W1/W2 is preferably in the range of 1.25 to 1.5 and, more preferably, near 1.25.

By thus setting the dimensional ratio W1/W2 between the straight part 31 and the intermediate part 32 in the range of 1.25 to 1.5, it is possible to increase the strength of the stator core while preventing an increase in the stator core mass and a decrease in the winding area. That is, with the above setting, it is possible to satisfactorily balance between the stator mass, the winding area, and the stator core strength. As a result, in the electric motor having a stator with a polygonal outer shape in cross section, it is possible to effectively reduce vibration and noise without resin-molding the stator.

The present invention is not limited to the above embodiment and may be variously modified within the scope of the invention.

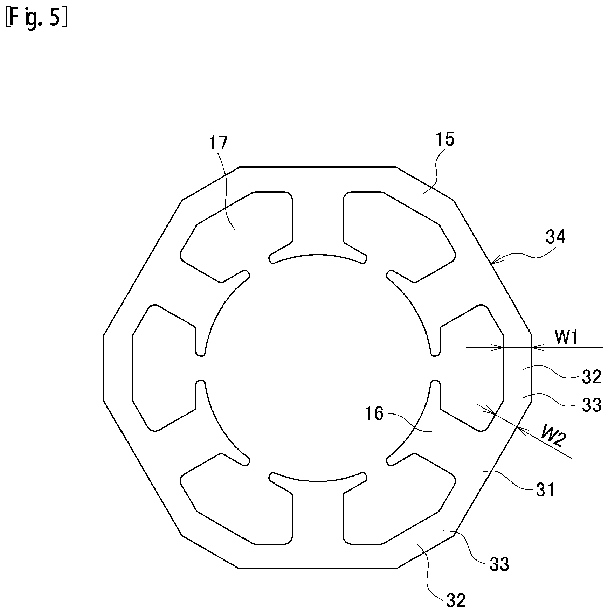

For example, although the stator core 14 having the bent-shaped intermediate part 32 is employed in the above embodiment, the present invention is applicable also to a stator core 34 as illustrated in FIG. 5 in which a part of the intermediate part 32 has a straight shape. In this case, the bent parts 35 are formed to be bent on both sides of the intermediate part 32 along the peripheral direction (rotor rotation direction), and a stress concentrates thereon. However, in this case as well, by setting the dimensional ratio W1/W2 between the straight part 31 and the intermediate part 32 in the range of 1.25 to 1.5, it is possible to satisfactorily balance between the stator mass, the winding area and the stator core strength as described previously.

Further, the number of slots of the stator 11 is not limited to six, and the present invention is also applicable to a three-, four-, eight-, and nine-slot motors. In association with a change in the number of the slots, the outer shape of the stator core 14 is changed to a polygonal shape such as a triangular, quadrangular, or octagonal shape. Further, although the brushless motor is employed as the embodiment of the present invention, the present invention is also applicable to a brushed motor.

In addition, although the motor 2 has an SPM (Surface Permanent Magnet) configuration in which the magnet 19 directly faces the stator core 14, the present invention is also applicable to a motor having an IPM (Interior Permanent Magnet) configuration in which a magnet is embedded inside a steel rotor core provided on the rotor side.

### Industrial Applicability

The brushless motor according to the present invention is widely applicable not only to vehicle mounted motors, but also to electric motors used for home appliances and industrial machines.

### Reference Signs List

- 1:: Motor unit
- 2:: Brushless motor
- 3:: Deceleration mechanism part
- 4:: Rotary shaft
- 5:: Output shaft
- 6:: Worm (drive gear)
- 7:: Worm wheel (driven gear)
- 11:: Stator
- 12:: Rotor
- 13:: Motor housing
- 14:: Stator core
- 15:: Outer peripheral part
- 16:: Tooth part
- 17:: Slot
- 18:: Winding
- 18U, 18V, 18W:: Winding
- 19:: Magnet
- 19a:: Magnet outer peripheral surface
- 21:: Bearing
- 22:: Gear case
- 23:: Bearing
- 24:: Bearing
- 31:: Straight part
- 32:: Intermediate part
- 33:: Bent part
- 34:: Stator core
- 35:: Bent part
- W1:: Intermediate part width dimension
- W2:: Straight part width dimension

## Claims

1. An electric motor **characterized by** comprising:
a rotor; and
a stator core rotatably provided outside the rotor and having a polygonal outer shape in cross section, wherein
the stator core has a ring-shaped outer peripheral part and a plurality of tooth parts arranged along a rotation direction of the rotor so as to protrude from the outer peripheral part toward the rotor,
the outer peripheral part has straight parts formed at the bases of the respective tooth parts, intermediate parts formed between adjacent straight parts, and bent parts each formed in each intermediate part, and
a width W1 of the intermediate part in the radial direction is set larger than a width W2 of the straight part in the radial direction (W1 > W2).

2. The electric motor according to claim 1, **characterized in that**
the ratio (W1/W2) between the width W1 of the intermediate part in the radial direction and the width W2 of the straight part in the radial direction is set in the range of 1.25 to 1.5.

3. The electric motor according to claim 1, **characterized by** further comprising a winding wound around the tooth part and housed in a slot formed between the tooth parts, wherein
the ratio (W1/W2) between the width W1 of the intermediate part in the radial direction and the width W2 of the straight part in the radial direction is set in the range of 1.25 to 1.5 so as to relieve a stress applied to the intermediate part while preventing an increase in a mass of the stator core and a decrease in a winding area in the slot.
